# EUROPEAN PATENT SPECIFICATION

(11) **EP 0 826 485 B1**
(45) Date of publication and mention of the grant of the patent: **01.08.2001**
(21) Application number: 96202360.2
(22) Date of filing: 24.08.1996
(51) Int. Cl.: B29D 31/50, B29D 31/515, A43B 13/14

(54) **Enhancements for the manufacturing of upper soles for shoes**
Erleichterungen bei der Herstellung von Brandsohlen für Schuhe
Mesures facilitant la fabrication de semelles intérieures pour chaussures

(43) Date of publication of application: 04.03.1998
(73) Proprietor: Salcedo Trujillo, José, 03206 Elche (Alicante) (ES)
(72) Inventor: Salcedo Trujillo, José, 03206 Elche (Alicante) (ES)
(74) Representative: Ungria Lopez, Javier

(56) References cited:
- EP-A- 0 048 965
- EP-A- 0 449 750
- DE-A- 1 529 892
- DE-U- 1 914 008
- US-A- 4 562 606
- PATENT ABSTRACTS OF JAPAN vol. 013, no. 447 (C-642), 6 October 1989 & JP 01 171502 A (ACHILLES CORP), 6 July 1989,

## Description

### OBJECT OF THE INVENTION

The invention relates to a process and a mould for the manufacturing of upper soles for shoes, the object of which is to enable the manufacturing of upper soles incorporating in the side surface and in the upper perimeter a section that defines a curved-convex narrowing. For that purpose, the mould used in the manufacturing process has been enhanced. The invention further relates to an upper sole obtained by said process.

### BACKGROUND

The soles of some shoes consist of a lower part on which the upper sole is fixed.

However, the upper sole used for this kind of shoes presents a profile the side parts of which are almost vertical and the upper surface presents a shank that adapts to the shape of the foot.

To manufacture the upper soles to be fixed to the soles mentioned above, it is necessary to use a mould consisting of a receptacle where a rubber conglomerate is deposited. Then, the receptacle is closed with a lid that includes a protrusion that determines the concavities to be made in the upper part of the upper sole.

Afterwards, the lid of the receptable is removed thereby obtaining an upper sole of the desired shape which is, in turn, directly removed from the receptacle.

This manufacturing process using such mould prevents the manufacturing of upper soles with bent side walls as it is impossible to get the upper sole when the lid is removed due to the fact that such bendings force the upper sole to remain within the receptacle. It is impossible to remove such upper sole without breaking it, which represents an inconvenience.

EP-A-0449750 discloses a mould for direct injection of a sole onto the upper, for use in automatic injection machines. The mould comprises a base and an intermediate part divided longitudinally into two halves. These halves are moved horizontally and, when closed, grip both the base (which is "embedded") and the last dressed with the upper, which acts as a cover. The intermediate part forms the cavity of the mould between said intermediate part, the base and the last. The upper portion of the intermediate part, which comes into contact with the last, is shaped like a claw in order to apply pressure to the entire side perimeter of the dressed last so that the injected material cannot escape.

JP-A-01171502 also discloses a mould for injecting the sole directly onto the upper; here, a ready-made sole is placed on the base, and polyurethane fills the mould cavity and joins the upper on the last to the previously positioned sole.

Also US-A-4562606, DE-U-1914008 and DE-A-1529892 relate to direct injection moulding of a sole onto an upper.

EP-A-0048965 relates to the application of a soft filler to an already made sole.

### DESCRIPTION OF THE INVENTION

To solve the above-mentioned problems, the invention as claimed can be applied to those processes where a mould consisting of a receptacle with an upper lid is used. However, it incorporates the characteristic that the receptacle consists of two parts - a lower one or base and an upper one or body - so that the upper part of the body has a narrowing determined by a concave curve. The upper sole obtained from such mould presents a round side perimeter in the upper part according to a section that defines a curved-convex narrowing.

Therefore, to enable the extraction of the upper sole obtained through the mould which is the subject matter of the invention, it is necessary to remove the base of the receptacle instead of the lid in order to reach the upper sole through the lower part and to remove it without encountering any kind of obstacle during such removal.

This way, the enhancements of the invention provide a special configuration of the upper sole with the advantage of a new finishing that results in a different finishing of the band of the shoe and, in turn, a more solid and attractive aspect for the user.

Hereinafter, in an effort to better understand the main characteristics of the descriptive report and as an integral part of it, a set of drawings is attached where, as an illustration and without limitation, the object of the invention has been represented:

### DESCRIPTION OF THE DRAWINGS

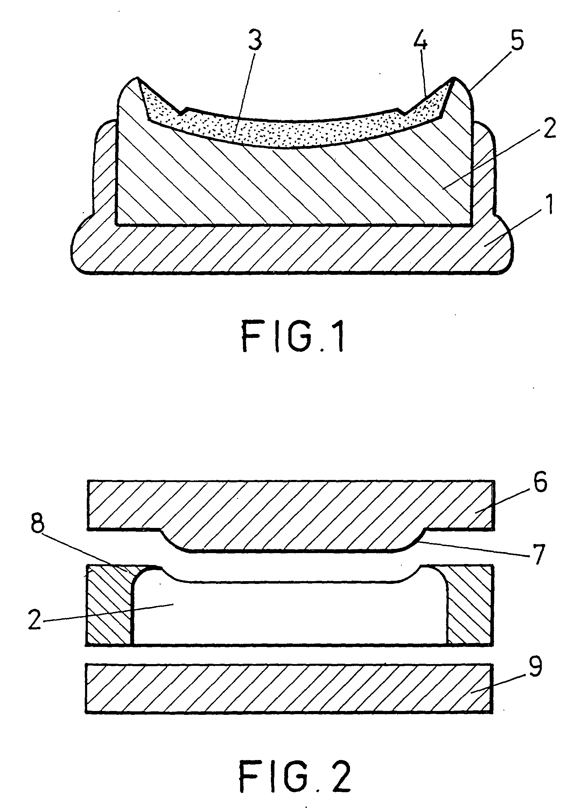

Figure 1.- Shows a cross-section of a shoe sole consisting of an upper sole obtained through the enhancements introduced in the manufacturing of upper soles in accordance with the invention.

Figure 2.- Shows a schematic cross-section of the mould that enables to introduce the enhancements of the invention.

### DESCRIPTION OF AN EXAMPLE OF THE EXECUTION OF THE INVENTION

As described in the background of the invention, the manufacturing of soles using a lower part or sole 1 to which an upper one or upper sole 2 is fixed is a well known process. The upper surface of the upper sole presents a shank that adapts to the shape of the foot.

On such concavity 3 a foam stuffing 3 can be placed which is then coated with a leather lining 4.

The enhancements of the invention are focused on obtaining an upper sole 2, the side surface perimeter and the upper surface of which include a section that defines a curved-convex narrowing 5. For that purpose, the mould used to shape the upper sole 2, incorporates a structure determined by a receptacle consisting of two parts: a lower one or base 9 and an upper one or body 8 which can be covered by a lid 6 with a longitudinal protrusion 7 with a series of convex bendings.

This enables to manufacture upper soles 2 in such a way that the body 8 is fixed to the base 9. This allows to introduce rubber conglomerate within the body 8 and, then, to place the lid 6. The longitudinal protrusion 7 of the lid forces the rubber upper sole 2 to adopt the exact shape which, in turn, is adapted to the sole of the foot which corresponds to the upper surface of the upper sole 2.

Afterwards, the base 9 is removed so that it is possible to directly reach the upper sole 2 and make its extraction easier since the curved-convex bending 5 of the upper sole 2 does not prevent the removal of the upper sole 2 as in the case of the conventional system. As previously mentioned in the background of this invention, such conventional system exclusively consists of a receptacle and a lid so that if the relevant bendings enabling the materialization of the curved-convex section 5 are made, once the lid is removed it is not possible to, in turn, remove the upper plant 2 since this latter is firmly housed within the receptacle and, therefore, the conventional upper soles present in their perimeter an almost vertical side surface.

Consequently, through the enhancements introduced by the invention, it is possible to manufacture a new upper sole that provides a new finishing to the band of the shoe.

## Claims

1. A process for the manufacturing of upper soles of shoes, including the use of a mould consisting of a receptacle with an upper lid (6) that is not the last with the upper thereon;
characterized in that
a mould is used wherein the receptacle of the mould is formed by two elements, said two elements comprising a lower element constituting a base (9) of the mould and an upper element constituting a body (8) with a narrowing in the upper part, wherein the process includes the step of, once the upper sole (2) has been shaped in the mould, removing the base (9) of the receptacle in order to remove the upper sole (2) from below.

2. A mould for manufacturing upper soles of shoes, the mould comprising a receptacle with an upper lid (6) that is not the last with the upper thereon;
characterized in that
the receptacle of the mould is formed by two elements, said two elements comprising a lower element constituting a base (9) of the mould and an upper element constituting a body (8) with a narrowing in the upper part, wherein the base of the mould is removable in order to allow removal of the upper sole (2) from below.

3. Upper sole for a shoe,
obtainable by means of a process in accordance with claim 1, whereby the side perimeter of the upper sole (2) is rounded at the upper surface according to a section that defines a curved-convex narrowing (5).

4. Upper sole according to claim 3, wherein the upper sole is made up of a rubber conglomerate, the upper surface of which is lined.

## Patentansprüche

1. Verfahren zum Herstellen von Brandsohlen von Schuhen, das den Einsatz einer Form einschließt, die aus einem Behälter mit einem oberen Deckel (6) besteht, der nicht der Leisten mit der Brandsohle darauf ist,
**dadurch gekennzeichnet,** dass
eine Form eingesetzt wird, bei der der Behälter der Form durch zwei Elemente gebildet wird, wobei die zwei Elemente ein unteres Element umfassen, das ein Unterteil (9) der Form bildet, und ein oberes Element, das einen Körper (8) mit einer Verengung im oberen Teil bildet, und das Verfahren den Schritt einschließt, bei dem, wenn die Brandsohle (2) in der Form geformt worden ist, das Unterteil (9) des Behälters entfernt wird, um die Brandsohle (2) von unten her zu entfemen.

2. Form zum Herstellen von Brandsohlen von Schuhen, wobei die Form einen Behälter mit einem oberen Deckel (6) umfasst, der nicht der Leisten mit der Brandsohle darauf ist,
**dadurch gekennzeichnet,** dass
der Behälter der Form durch zwei Elemente gebildet wird, wobei die beiden Elemente ein unteres Element umfassen, das ein Unterteil (9) der Form bildet, und ein oberes Element, das einen Körper (8) mit einer Verengung im oberen Teil bildet, und das Unterteil der Form entfernt werden kann, um die Brandsohle (2) von unten her entfernen zu können.

3. Brandsohle für ein Schuh, die mit einem Verfahren nach Anspruch 1 hergestellt werden kann, wobei der seitliche Rand der Brandsohle (2) an der Oberseite entsprechend einem Abschnitt abgerundet ist, der eine gekrümmt-konvexe Verengung (5) bildet.

4. Brandsohle nach Anspruch 3, wobei die Brandsohle aus einem Gummikonglomerat besteht, dessen Oberseite überzogen ist.

## Revendications

1. Procédé de fabrication de semelles supérieures de chaussure, comprenant l'utilisation d'un moule se composant d'un réceptacle avec un couvercle supérieur (6) qui n'est pas le dernier avec la semelle supérieure dessus;
caractérisé en ce que
on utilise un moule dans lequel le réceptacle du moule est formé par deux éléments, lesdits deux éléments comportant un élément inférieur constituant une base (9) du moule et un élément supérieur constituant un corps (8) avec un rétrécissement de la partie supérieure, le procédé comprenant les étapes consistant à, une fois que la semelle supérieure (2) a été mise en forme dans le moule, enlever la base (9) du réceptacle afin d'enlever la semelle supérieure (2) par en dessous.

2. Moule pour la fabrication de semelles supérieures de chaussure, le moule comportant un réceptacle avec un couvercle supérieur (6) qui n'est pas le dernier avec la semelle supérieure dessus;
caractérisé en ce que
le réceptacle du moule est formé par deux éléments, lesdits deux éléments comportant un élément inférieur constituant une base (9) du moule et un élément supérieur constituant un corps (8) avec un rétrécissement de la partie supérieure, la base du moule étant amovible afin de permettre le retrait de la semelle supérieure (2) par en dessous.

3. Semelle supérieure pour une chaussure, pouvant être obtenue au moyen d'un procédé selon la revendication 1, de sorte que le périmètre latéral de la semelle supérieure (2) est arrondi au niveau de la surface supérieure selon une section qui définit un rétrécissement courbe convexe (5).

4. Semelle supérieure selon la revendication 3, dans laquelle la semelle supérieure est fabriquée en caoutchouc aggloméré, dont la surface supérieure est revêtue.
